# EUROPEAN PATENT SPECIFICATION

(11) **EP 3 655 474 B1**
(45) Date of publication and mention of the grant of the patent: **24.05.2023**
(21) Application number: 18745556.3
(22) Date of filing: 20.07.2018
(51) Int. Cl.: C08K 3/013, C08K 3/26, C08K 3/34, C08K 3/36, C08K 7/18, C08K 11/00, C08J 3/075, C08F 120/20, C08F 220/20

(54) **HYDROGELS WITH IMPROVED MECHANICAL STRENGTH**
HYDROGELE MIT VERBESSERTER MECHANISCHER FESTIGKEIT
HYDROGELS AYANT UNE RÉSISTANCE MÉCANIQUE AMÉLIORÉE

(30) Priority: 20.07.2017 EP 17182332
(43) Date of publication of application: 27.05.2020
(73) Proprietor: Sika Technology AG, 6340 Baar (CH)
(72) Inventor: HAUFE, Markus, 8048 Zurich (CH); GUT, Cyrill, 8820 Wädenswil (CH)
(74) Representative: Sika Patent Attorneys
(86) International application number: PCT/EP2018/069789
(87) International publication number: WO 2019/016378

(56) References cited:
- WO-A1-93/23094
- WO-A1-2009/073205
- WO-A1-2017/025528
- WO-A1-2017/037227
- WO-A1-2017/162528
- DE-A1- 4 214 334
- US-A- 3 914 341

## Description

### Technical field

The invention relates to hydrogels, which are typically used in the field of construction industry for sealing and filling of cracks, voids, flaws, and cavities in concrete structures.

### Background of the invention

Hydrogels are commonly used in construction industry for sealing and filling of cracks, voids, flaws, and cavities in concrete structures. They are produced by polymerizing and cross-linking of water-soluble compounds, such as acrylic monomers, oligomers, and pre-polymers, in water based solutions or by contacting superabsorbent polymers with water. A hydrogel forming mixture typically comprises, in addition to the polymerizable compounds, a free-radical initiator, optionally an accelerator for the initiator, and water. The polymerizable compounds must be water-soluble in order to achieve the hydrogel upon polymerization. In case of non-water soluble polymerizable reactants, water could not be absorbed in the crosslinked polymer network resulting in separation of water from the polymer matrix.

The constituents of a hydrogel forming mixture, other than water, are usually stored and delivered in a form of two-, three- or four-part compositions or kits due to the reactiveness of the ingredients. In a two-component composition, for instance, one of the components contains the polymerizable compounds and optionally the catalyst, and the other component contains the initiator. In a three-component composition, the polymerizable compounds, the initiator, and the catalyst are each provided as a separate component. A hydrogel forming mixture is then prepared at the time of use by mixing the components of the multiple-component composition and the constituents contained therein with water. The water required for obtaining a hydrogel forming mixture can also be contained in one or several components of the multiple-component composition. Typically, at least a significant part of the water is not contained in the multiple-component composition but it is added to the composition at the time use.

In injection applications, the hydrogel forming mixtures are pumped to cavities of concrete structures, where they form hydrogels within the open time of the composition. In such applications the viscosity of the mixture typically has to be low in order to enable the injection through narrow holes of the concrete structures. The viscosity of the hydrogel forming mixture can be optimized for a specific application, for example, by increasing the amount of water. Increasing the water content also decreases the production costs of hydrogels since part of the amount of polymerizable components is replaced with water. However, the mechanical strength of the resulting hydrogel is also directly proportional to the polymer content so that increasing the water content also results in hydrogels with low mechanical strength. It would therefore be advantageous to be able to decrease the concentration of polymerizable monomers and pre-polymers in a hydrogel forming composition without simultaneously deteriorating the mechanical strength of the obtained hydrogel material.

There is thus a need for a low cost hydrogel material, which has improved mechanical strength and which is suitable for use in the construction industry for sealing and filling of cracks, voids, flaws, and cavities in concrete structures.

### Summary of the invention

The object of the present invention is to provide a composition for forming a hydrogel, which has improved mechanical strength, such as improved Shore A hardness, tensile strength, elongation at break and tear propagation resistance.

Another object of the present invention is to provide a low viscosity hydrogel forming composition, which can be used as injection material for sealing and filling of cracks, voids, flaws, and cavities in concrete structures.

Still another objective of the present invention is to provide a reinforced hydrogel, which can be produced with lower production costs than state-of-the-art hydrogels.

The subject of the present invention is a hydrogel forming composition as defined in claim 1.

It was surprisingly found that the mechanical strength of hydrogels obtained by polymerizing hydrogel forming compositions containing a relatively high amount of water and low amount of radically polymerizable compounds can be improved by the addition of one or more solid particulate fillers to such com positions.

One of the advantages of the present invention is that hydrogels having improved mechanical strength can be prepared from compositions having low viscosity and which, therefore, are suitable for use as injection materials for sealing and filling of cracks, voids, flaws, and cavities in concrete structures. Furthermore, the production costs of such injection materials are lower compared to State-of-the-Art hydrogel based injection materials.

Other aspects of the present invention are presented in other independent claims. Preferred aspects of the invention are presented in the dependent claims.

### Detailed description of the invention

The subject of the present invention is a hydrogel forming composition comprising:
a) At least one water-soluble (meth)acrylic compound,
b) At least one free-radical initiator,
c) Optionally at least one accelerator,
d) At least one solid particulate filler, and
e) Water,

wherein the at least one solid particulate filler comprises 1 - 35 wt.-%,
preferably 2-25 wt.-%, of the total weight of the hydrogel forming composition and wherein the weight ratio of the total amount of said at least one water-soluble (meth)acrylic compound to the amount of water is in the range of 0.1:1 to 5:1 and wherein the at least one solid particulate filler is selected from the group consisting of precipitated silica, fumed silica, diatomaceous earth, calcium silicate, precipitated calcium carbonate, particulate silica, and phonolite and wherein the at least one solid particulate filler has a median particle size d₅₀ of 1.0 - 100.0 µm.

The term "(meth)acrylic" designates methacrylic or acrylic. Accordingly, (meth)acryloyl designates methacryloyl or acryloyl. A (meth)acryloyl group is also known as (meth)acryl group. A (meth)acrylic compound can have one or more (meth)acryl groups, such as mono- di-, tri- etc. functional (meth)acrylic compounds.

The term "hydrogel" designates a polymeric material that exhibits the ability to swell and retain a significant fraction of water within its structure, but will not dissolve in water. The ability of hydrogels to absorb water arises from hydrophilic functional groups attached to the polymeric backbone, while their resistance to dissolution arises from cross-links between polymer chains. The polymer chains can be cross-linked via covalent bonds (chemical gel) or via non-covalent bonds such as ionic interaction or hydrogen bonds (physical gel).

Substance names beginning with "poly" designate in the present document substances which formally contain, per molecule, two or more of the functional groups occurring in their names. For instance, a polyol refers to a compound having at least two hydroxyl groups. A polyether refers to a compound having at least two ether groups.

The term "water-soluble compound", for example a water-soluble (meth)acrylic compound, designates compounds having a solubility of at least 5 g/100 g water, at a temperature of 20°C.

The term "gelling time" designates a time frame within a hydrogel is formed once the constituents of a hydrogel forming composition have been mixed with each other.

The term "open time" designates a time period for which the composition can still be processed, such as injected into a crack, after the constituents of a hydrogel forming composition have been mixed with each other. The end of the open time is usually associated with such an increase in viscosity of the mixture that processing of the mixture is no longer possible.

The term "normal room temperature" designates a temperature of 23 °C.

The at least one water-soluble (meth)acrylic compound may be a monomer, an oligomer or a polymer and it may have a molecular weight or, if it is an oligomer or polymer with a molecular weight distribution, a weight average molecular weight (M_{w}), for example, of not more than 12,000 g/mol, preferably not more than 8,000 g/mol and more preferably not more than 4,000 g/mol. The weight average molecular weight (M_{w}) may be determined by gel permeation chromatography using polystyrene as standard in a polymer solution in tetrahydrofuran.

The at least one (meth)acrylic compound is water-soluble in order to achieve a (meth)acrylic hydrogel upon polymerization. Preferably, the at least one (meth)acrylic compound has a solubility of at least 5 g/100 g water at a temperature of 20°C. Most preferably water and the at least one (meth)acrylic compound are completely soluble in each other, i.e. they form a homogeneous phase at any mixing ratio. (Meth)acrylic compounds which are not water-soluble cannot be used as main polymerizable compound for producing a hydrogel since they cause separation of the water from the (meth)acrylic polymer formed. However, these compounds can be present in the hydrogel forming composition but preferably only in minor amounts.

The at least one water-soluble (meth)acrylic compound may have one, two or more than two (meth)acryloyl groups. (Meth)acrylic compounds having only one (meth)acryloyl group are preferred. According to one or more preferable embodiments, the hydrogel forming composition contains less than 10 wt.-%, more preferably less than 5 wt.-%, most preferably less than 2.5 wt.-% of (meth)acrylic compounds having more than one (meth)acryloyl group.

Preferably, the at least one water-soluble (meth)acrylic compound is present in the hydrogel forming composition in a total amount of 5 - 50 wt.-%, more preferably 10 - 45 wt.-%, even more preferably 12.5 - 40 wt.-%, most preferably 15 - 35 wt.-%, based on the total weight of the hydrogel forming composition. In case multiple different (meth)acrylic compounds are present in the composition, "the amount of the at least one (meth)acrylic compound" refers to the total content of all (meth)acrylic compounds.

The at least one water-soluble (meth)acrylic compound is preferably selected from the group consisting of hydroxyl-functional (meth)acrylates, carboxyl-functional (meth)acrylic compounds, polyether (meth)acrylates, (meth)acrylamides, salts of carboxyl-functional (meth)acrylic compounds, (meth)acrylates having a sulfonic acid group, (meth)acrylamides having a sulfonic acid group, salts or esters of (meth)acrylates having a sulfonic acid group, salts of (meth)acrylamides having a sulfonic acid group, (meth)acrylates having a quaternary nitrogen containing group, and (meth)acrylamides having a quaternary nitrogen containing group.

A hydroxyl-functional (meth)acrylate is a (meth)acrylate having one or more hydroxyl groups. Examples of suitable water-soluble hydroxyl-functional (meth)acrylates are hydroxyethylmethacrylate (HEMA), hydroxyethylacrylate (HEA), hydroxypropylmethacrylate (HPMA), hydroxypropylacrylate (HPA), hydroxybutylmethacrylate (HBMA) and hydroxybutylacrylate (HBA).

A carboxyl-functional (meth)acrylic compound is a (meth)acrylic compound having one or more carboxylic groups such as, for example, (meth)acrylic acids or (meth)acrylic acids having one or more additional carboxylic groups. Examples of suitable carboxyl-functional water-soluble (meth)acrylic compounds and anhydrides thereof are methacrylic acid, methacrylic acid anhydride, acrylic acid, acrylic acid anhydride, adducts of hydroxyethylmethacrylate with anhydrides, itaconic acid, maleic acid, maleic acid anhydride, adducts of maleic acid anhydride, and succinic acid anhydride.

The cation for said salts of carboxyl-functional (meth)acrylic compounds may be any common cation used in such compounds. Examples of suitable salts are metal salts, in particular alkali metal salts or earth alkaline metal salts, such as sodium salts, potassium salts or magnesium salts, or ammonium salts of carboxyl-functional (meth)acrylic compounds. In particular, suitable salts of carboxyl-functional (meth)acrylic compounds include salts of (meth)acrylic acid, for example, sodium acrylate, sodium methacrylate, potassium acrylate, potassium methacrylate, magnesium diacrylate, and magnesium dimethacrylate.

Polyether (meth)acrylates are polyethers having one, two, three or more (meth)acrylate groups, respectively, preferably at the terminal ends thereof, wherein the polyether is preferably a polyethylene glycol (PEG), a methoxy polyethylene glycol (MPEG), a polyethylene glycol polypropylene glycol (PEG/PPG) copolymer, in particular block copolymer, an ethoxylated trimethylolpropane or an ethoxylated pentaerythritol. When the polyether is a PEG/PPG copolymer or blockcopolymer, respectively, the amount of PEG therein is preferably at least 30 wt.-%, in order to achieve suitable water solubility. Particularly suitable polyether (meth)acrylates include those having one or two (meth)acrylate groups.

Polyether (meth)acrylates also include polyethers containing further structural units, such as urethane groups, for example oligomers or prepolymers obtained by reaction of polyetherpolyols, in particular polyetherdiols, or polyethermonools with compounds having two functional groups, which are reactive to hydroxyl groups such as polyisocyanates. For instance, polyether (meth)acrylates may be obtained by reaction of polyetherpolyols or polyethermonools such as PEG, MPEG, PEG-PPG or MPEG-PPG or MPPG-PEG block copolymers, with polyisocyanates to obtain an isocyanate-functional product which is subsequently reacted with a hydroxyl-functional (meth)acrylic compound such as hydroxyethyl methacrylate (HEMA). With respect to water solubility, also in this case the PEG/PPG blocks preferably have an amount of PEG of at least 30 wt.-%.

Examples of suitable water-soluble polyether (meth)acrylates and polyether di(meth)acrylates are, for example, PEG-di(meth)acrylates such as PEG 200 dimethacrylate, PEG 400 dimethacrylate, PEG 600 dimethacrylate, PEG 2000 dimethacrylate, MPEG-(meth)acrylates such as MPEG 350 (meth)acrylate, MPEG 550 (meth)acrylate, MPEG 1000 (meth)acrylate, and MPEG 2000 (meth)acrylate. Such compounds are commercially available, for example under the trade name of Sartomer^{®} (from Sartomer, France), for example, as Sartomer^{®} SR252 (polyethylene glycol (600) dimethacrylate) and under the trade name of Bisomer^{®} (from Geo Specialty Chemicals, USA), for example, as Bisomer^{®} MPEG-350MA (methoxy polyethyleneglycol methacrylate).

Examples of ethoxylated trimethylolpropane (meth)acrylates and ethoxylated pentaerythritol (meth)acrylates include ethoxylated trimethylolpropane tri(meth)acrylate and ethoxylated pentaerythritol tetra(meth)acrylate. Such compounds are commercially available, for example, as Sartomer^{®} SR415, and Sartomer^{®} SR454, and Sartomer^{®} SR494 (all from Sartomer, USA).

The hydrogel forming composition may optionally comprise one or more water-soluble co-monomers. These co-monomers are co-polymerizable with the acrylic and/or methacrylic compounds or monomers, respectively. In particular, the water-soluble co-monomers have a solubility of at least 5 g/100 g water at 20°C. It goes without saying that the water-soluble co-monomer is different from the water-soluble acrylic and/or methacrylic compounds. The water-soluble co-monomer is preferably a vinyl compound such as a vinyl ester, a divinyl ester, a vinyl ether or a divinyl ether, preferably a hydroxyl-functional vinyl ether or a hydroxyl-functional divinylether.

The one or more water-soluble co-monomers, if used, are preferably used in relatively low amounts with respect to the water-soluble (meth)acrylic compounds, for example in an amount of not more than 15 wt.-%, preferably not more than 5 wt.-%, said proportions being based on the total weight of all water-soluble (meth)acrylic compounds and water-soluble co-monomers contained in the hydrogel forming composition and excluding all other constituents.

Examples of suitable water-soluble (meth)acrylates or (meth)acrylamides having a sulfonic acid group, and salts or esters thereof include 2-acrylamido-2-methylpropane sulfonic acid (AMPS^{®}), the sodium salt of 2-acrylamido-2-methylpropane sulfonic acid (Na-AMPSO), and sulfatoethyl methacrylate.

Examples of suitable water-soluble (meth)acrylates and (meth)acrylamides having a quaternary nitrogen containing group include 2-trimethylammoniummethyl methacrylate chloride and 3-trimethylammoniumpropyl methacrylamide chloride.

According to one or more embodiments, the at least one water-soluble (meth)acrylic compound is selected from the group consisting of hydroxyethylmethacrylate (HEMA), hydroxypropylmethacrylate (HPMA), methoxy polyethylene glycol methacrylate (MPEG-MA), maleic acid, itaconic acid, sodium acrylate, sodium methacrylate, potassium acrylate, potassium methacrylate, potassium salt of 3-sulfopropylacrylat, 2-acrylamido-2-methylpropane sulfonic acid (AMPSO), and sodium salt of 2-acrylamido-2-methylpropane sulfonic acid (Na-AMPSO), and magnesium acrylate.

According to one or more embodiments, the hydrogel forming composition comprises at least one water-soluble (meth)acrylic compound selected from the group consisting of hydroxyl-functional (meth)acrylates, carboxyl-functional (meth)acrylic compounds, polyether (meth)acrylates, and (meth)acrylamides and at least one water-soluble (meth)acrylic compound selected from the group consisting of salts of a carboxyl functional (meth)acrylic compound, (meth)acrylates having a sulfonic acid group, (meth)acrylamides having a sulfonic acid group, salts or esters of (meth)acrylates having a sulfonic acid group, salts of (meth)acrylamides having a sulfonic acid group, (meth)acrylates having a quaternary nitrogen containing group, and (meth)acrylamides having a quaternary nitrogen containing group.

According to one or more embodiments, the hydrogel forming composition comprises at least one hydroxyl-functional (meth)acrylic compound selected from the group consisting of hydroxyethylmethacrylate (HEMA), hydroxyethylacrylate (HEA), hydroxypropylmethacrylate (HPMA), hydroxypropylacrylate (HPA), hydroxybutylmethacrylate (HBMA) and hydroxybutylacrylate (HBA).

According to the invention, the weight ratio of the total amount of the at least one water-soluble (meth)acrylic compound to the amount of water in the hydrogel forming composition is in the range of 0.1:1 to 5:1, preferably, 0.1:1 to 3:1, more preferably 0.1:1 to 2:1, most preferably 0.1:1 to 1.5:1.

According to the invention, the hydrogel forming composition comprises at least one solid particulate filler selected from the group consisting of precipitated silica, fumed silica, diatomaceous earth, calcium silicate, precipitated calcium carbonate, particulate silica, and phonolite.

According to one or more embodiments, the at least one solid particulate filler is selected from the group consisting of precipitated silica, fumed silica, and diatomaceous earth. Hydrogels obtained from hydrogel forming compositions containing one or more of the above solid particulate fillers have been found to provide excellent mechanical properties, in particular high Shore A hardness, tensile strength, elongation at break and tear propagation resistance.

The preferred amount of the solid particulate filler depends on the field of application and on the desired mechanical properties of the hydrogel prepared by polymerizing the hydrogel forming composition. In case of an injection material suitable for filling cavities in concrete structures, the amount of the solid particulate filler is preferably lower in order to keep the viscosity of the hydrogel forming composition suitable for injection applications. It may be preferable that the at least one solid particulate filler is present in the hydrogel forming composition in a total amount of 1 - 20 wt.-%, more preferably 2-15 wt.-%, even more preferably 2.0 - 9.5 wt.-%, in particular 2.0 - 8.5 wt.-%, more preferably 2.5 - 7.5 wt.-%, most preferably 2.5 - 5.0 wt.-%, based on the total weight of the hydrogel forming composition. In case the hydrogel forming composition of the present invention is used for sealing cracks, voids, flaws in concrete structures or as a tire filling material, a higher amount of the solid particulate filler may be used. It may be preferable that the at least one solid particulate filler is present in the hydrogel forming composition in a total amount of 1 - 30 wt.-%, preferably 5 - 25 wt.-%, based on the total weight of the hydrogel forming composition. Furthermore, it may be preferable that the at least one solid particulate filler is present in the hydrogel forming composition in a total amount of 13.0 - 35.0 wt.-%, more preferably 14.5 - 35.0 wt.-%, even more preferably 16.5 - 35.0 wt.-%, in particular 17.5 - 32.5 wt.-%, most preferably 17.5 - 30.0, based on the total weight of the hydrogel forming composition.

The particle size of the at least one solid particulate filler is preferably chosen such that the particles remain suspended in the hydrogel forming composition once they have been mixed with the liquid constituents of the hydrogel forming composition. In particular, the particles of the at least one solid filler should not sediment or remain floating on the surface of the hydrogel forming composition after the mixing step.

It may be also preferable that the at least one solid particulate filler can be mixed with the other constituents of the hydrogel forming composition to form a homogeneously mixed composition. A "homogeneously mixed composition" refers in the present document to compositions, in which the individual constituents are distributed substantially homogeneously in the composition. For a person skilled in the art it is clear that within such homogeneously mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed composition" in accordance with the present invention.

According to the invention, the at least one solid particulate filler has a median particle size d₅₀ of 1.0 - 100.0 µm, preferably 2.5 - 75.0 µm, more preferably 5.0 - 50 µm.

The term median particle size d₅₀ refers to a particle size below which 50 % of all particles by volume are smaller than the d₅₀ value. The term "particle size" refers to the area-equivalent spherical diameter of a particle. The particle size distribution can be measured by laser diffraction according to the method as described in standard ISO 13320-1 :2009. In case the hydrogel forming composition contains a mixture of two or more different solid particulate fillers, the "median particle size of the at least one solid particulate filler" refers to the respective particle size of the mixture of solid particulate fillers.

The at least one solid particulate filler may have a BET surface area, measured by using the method as defined in EN ISO 9277:2010 standard, of not more than 1000 m²/g, preferably not more than 750 m²/g. It may be preferable that the at least one solid particulate filler has a BET surface area, measured by using the method as defined in EN ISO 9277:2010 standard, of 1 - 1000 m²/g, more preferably 10 - 750 m²/g.

Especially when the hydrogel forming composition is used as an injection material, the at least one solid particulate filler should be selected such that it is able to improve the mechanical strength of the hydrogel without significantly increasing the viscosity of the composition. High viscosity injection materials are difficult to pump through narrow cavities formed in concrete structures for injection reparations. With increasing viscosity the risk of damaging the concrete structure also increases as well as the application costs due to the higher energy consumption of the injection pumps. Some of the solid particulate fillers were found practically unsuitable for providing reinforced hydrogels due to high increase in viscosity of the hydrogel forming composition.

According to one or more embodiments the at least one solid particulate filler is precipitated silica. Both hydrophilic (water-wettable) and hydrophobic (non-water-wettable) precipitated silicas are suitable for use as the solid particulate filler. It was surprisingly found that hydrogel forming compositions containing precipitated silica as the solid particulate filler enable providing injection materials, which have relatively low viscosity. On the other hand, the hydrogels obtained by polymerization of such compositions have been found to have excellent mechanical properties, such as increased Shore A hardness, tensile strength, elongation at break, and tear propagation resistance compared to hydrogels prepared by polymerizing similar compositions without the solid particulate filler.

Suitable precipitated silica are commercially available, for example, under the trade name of Ultrasil^{®} (from Evonik Degussa), such as Ultrasil^{®} VN 2, Ultrasil^{®} VN 3, Ultrasil^{®} 3370, Ultrasil^{®} 7000, and Ultrasil^{®} 360; under the trade name of Sipernat^{®} (from Evonik Degussa), such as Sipernat^{®} D10, Sipernat^{®} D17, Sipernat^{®} 22, Sipernat^{®} 22 S, Sipernat^{®} 22 LS, Sipernat^{®} 33, Sipernat^{®} 50, Sipernat^{®} 50 S, Sipernat^{®} 320 S, Sipernat^{®} 320 DS, Sipernat^{®} 325C, Sipernat^{®} 340, Sipernat^{®} 360, Sipernat^{®} 500 LS, Sipernat^{®} 600, Sipernat^{®} 630, Sipernat^{®} 820 A, Sipernat^{®} 880, and Sipernat^{®} 2200; under the trade name of LO-VEL^{®} from PPG Industries; and under the trade name of Zeodent^{®} from J. M. Huber Corporation.

According to one or more embodiments, the hydrogel forming composition comprises 1 - 35 wt.-%, preferably 1 - 20 wt.-%, more preferably 2 - 15 wt.-%, even more preferably 2.0 - 9.5 wt.-%, in particular 2.0 - 8.5 wt.-%, more preferably 2.5 - 7.5 wt.-%, most preferably 2.5 - 5.0 wt.-%, based on the total weight of the hydrogel forming composition, of precipitated silica as the solid particulate filler. According to one or more further embodiments, the hydrogel forming composition comprises 13.0 - 35.0 wt.-%, more preferably 14.5 - 35.0 wt.-%, even more preferably 16.5 - 35.0 wt.-%, in particular 17.5 - 32.5 wt.-%, most preferably 17.5 - 30.0, based on the total weight of the hydrogel forming composition, of precipitated silica as the solid particulate filler

The free-radical initiator serves to initiate polymerization of the (meth)acrylic compounds. These initiators are known to those skilled in the art. The initiator may be, for example, an organic or inorganic hydroperoxide, an organic or inorganic peroxide such as a peroxydisulfate or persulfate salt, an azo compound, or any other material, which is known to the skilled person for being capable to generate radicals. Preferably, the at least one free-radical initiator has a solubility of at least 5 g/100 g water at a temperature of 20°C.

The at least one free-radical initiator is preferably selected from the group consisting of azobisisobutyronitrile (AIBN), sodium persulfate (NAPS), potassium persulfate, ammonium persulfate, hydrogen peroxide, benzoyl peroxide, cumene hydroperoxide, tert-butyl hydroperoxide, diisopropylbenzene hydroperoxide, and mixtures thereof.

Preferably, said at least one free-radical initiator is present in the hydrogel forming composition in a total amount of 0.05 - 10.0 wt.-%, more preferably 0.1 - 7.5 wt.-%, even more preferably 0.1 - 5.0 wt.-%, most preferably 0.1 - 2.0 % by weight, based on the total weight of the hydrogel forming composition. If multiple different free-radical initiators are present in the composition, "the total amount of the at least one free-radical initiator" refers to the total content of all free-radical initiators in the hydrogel forming composition.

The accelerator serves to accelerate the free-radical polymerization reaction of the water-soluble (meth)acrylic compounds. The catalyzing effect of the accelerator may be, for example, based on interaction with the free-radical initiator promoting radical generation. These accelerators are known to those skilled in the art. It is preferable that the hydrogel forming composition comprises at least one accelerator for free-radical formation.

Suitable accelerators for free-radical formation include reducing agents, preferably, selected from the group consisting of ascorbic acid, sodium formaldehyde sulfoxylates (SFS) such as Rongalit^{®} (commercially available from BASF), organic sulfinic acid derivatives and salts thereof such as Bruggolite^{®} FF6 and FF7 (commercially available from Bruggeman Chemical), toluidine derivatives, transition metal salts, transition metal complexes, alkylaminoalkyl(meth)acrylamides, alkylaminoalkyl(meth)acrylates, alkanolamines, ethoxylated alkanolamines, inorganic sulfur bearing salts, a reducing sugar such as glucose, and mixtures thereof.

Suitable alkanolamines for use as an accelerator for free-radical formation include monoalkanol, dialkanol and trialkanol amines, preferably selected from the group consisting of ethanolamine, dimethylaminoethanol, methylethanolamine, N,N-diethylethanolamine, 2-amino-2-methyl-propanol, N-butylethanolamine, N-methyldiisopropanolamine, methyldiethanolamine, diisopropanolamin, diethanolamine, triethanolamine, N-butyldiethanolamine, 2-amino-2-methyl-1,3-propandiol, and mixtures thereof.

Suitable alkylaminoalkyl(meth)acrylamides and alkylaminoalkyl(meth)acrylates for use as an accelerator for free-radical formation include dimethylaminopropyl methacrylamide (DMAPMA) and dimethylaminoethyl methacrylate (DMAEMA).

Preferably, the hydrogel forming composition comprises at least one accelerator for free-radical formation selected from the group consisting of diethanolamine (DEA), triethanolamine (TEA), N-butyldiethanolamine, 2-amino-2-methyl-1,3-propandiol, dimethylaminopropyl methacrylamide (DMAPMA), dimethylaminoethyl methacrylate (DMAEMA), and mixtures thereof.

Preferably, the at least one accelerator for free-radical formation is present in the hydrogel forming composition in a total amount of 0.05 - 7.5 wt.-%, more preferably 0.1 - 5.0 wt.-%, even more preferably 0.1 - 3.0 wt.-%, most preferably 0.5 - 3.0 wt.-%, based on the total weight of the hydrogel forming composition. If multiple different accelerators for free-radical formation are present in the composition, "the total amount of the at least one accelerator" refers to total content of all accelerators for free-radical formation in the hydrogel forming composition.

Another subject of the present invention is a method for producing the hydrogel forming composition of the present invention.

The hydrogel forming composition may be produced by combining the constituents a) to e) of the hydrogel forming composition under mixing. Basically, the constituents may be mixed together in any order to provide the hydrogel forming composition. However, the at least one free-radical initiator and the at least one accelerator are preferably not mixed together in a separate process step. Suitable means for mixing include static mixers and dynamic mixers, for example, container-stirrer type mixers such as rotor-stator type mixers, dissolver mixers, colloidal mixers and other high shear mixers. The choice of suitable mixing apparatus depends on the open time of the hydrogel forming composition. In case of long open time, the mixing can be conducted with a container equipped with a stirrer whereas in case of short open time, a static mixer is preferably used for mixing.

The constituents of the hydrogel forming composition of the present invention, except water, are typically provided as a multiple-component composition. The term "component" refers here to a part of the composition, which contains one or more constituents of the composition. The components of the multiple-component composition are provided as physically separated from each other in order to prevent premature reaction of the constituents. Typically, the components are stored in separate air- and moisture impermeable packages or compartments of a single package and they are mixed together, optionally with other components, at the time of use or immediately before the time of use of the multiple-component composition.

Part of the water comprised in the hydrogel forming composition can also be contained in one or several components of the multiple-component composition. It is, however, preferable that a significant part of the water of the hydrogel forming composition, such as at least 70 wt.-%, is not provided as part of the multiple-component composition but is mixed at the time of use with the multiple-component composition in order to prepare the hydrogel forming composition. It may be preferred that at least 80 wt.-%, most preferably at least 95 wt.-% of the water of the hydrogel forming composition is not provided as part of the multiple-component composition but mixed at the time of use with the multiple-component composition. In particular, the multiple-component composition can comprise the constituents a) to d) of the hydrogel forming composition and not more than 30 wt.-%, more preferably not more than 20 wt.-%, most preferably not more than 15 wt.-%, based on the total weight of the multiple-component composition, of water.

The constituents of the multiple-component composition can in principle be arranged in the separate components in any conventional way. It is, however, preferable that the at least one free-radical initiator and the at least one accelerator for free-radical formation are not present in the same component in order to prevent the premature reaction of these constituents and to provide a storage-stable multiple-component composition. The term "storage-stable composition" refers here to a composition which, in particular in the absence of moisture, can be kept in a suitable package or facility, such as a drum, a pouch or a cartridge, for example, for a period of several months up to one year or more, without suffering any service-relevant change in the application properties and/or reactivity of the composition.

According to one embodiment, the method for producing a hydrogel forming composition comprises steps of:
i) Providing a multiple-component composition comprising the constituents a) to d) of the hydrogel forming composition of the present invention and
ii) Mixing the multiple-component composition provided in step i) with water. According to another embodiment, the method for producing a hydrogel forming composition comprises steps of:
   i') Providing a multiple-component composition comprising the constituents a) to c) of the hydrogel forming composition of the present invention,
   ii') Mixing the multiple-component composition provided in step i') with water, and
   iii') Mixing the mixture obtained in step ii') with the constituent d) of the hydrogel forming composition of the present invention.

According to still another embodiment, the method for producing a hydrogel forming composition comprises steps of:
i") Providing a multiple-component composition comprising the constituents a) to c) of the hydrogel forming composition of the present invention,
ii") Mixing the constituent d) of the hydrogel forming composition of the present invention with water, and
iii") Mixing the multiple-component composition obtained in step i") with the mixture obtained in step ii").

Another subject of the present invention is the use of the hydrogel forming composition of the present invention as injection material for sealing of constructions, tunnels, or mines or as a tire filling material.

The tire to be filled can be any conventional tire, preferably a pneumatic tire although semi-pneumatic tire may also be used. In particular preferable tires include those used in transportation vehicles. The tire may be, for example, an automobile tire, a bicycle tire, a motorcycle tire, a truck tire, an aircraft tire, an off-the-road tire, a farm trailer tire, a tire for heavy duty vehicles, a tire for a forestry vehicle or a tire for building machinery.

The hydrogel forming composition can be filled in the tire by any conventional procedure known by the skilled person. It is preferred that the cavity of the tire is fully filled with the mixture. The tire is usually mounted on the rim when the composition is fed into the tire. The composition is preferably fed into the tire under pressure, for example, by means of a pressure pump or a filling pump. A two component pump may be used to accomplish mixing of the constituents of the hydrogel forming composition and to provide filling pressure with one device. In case the hydrogel forming mixture has a relatively long open time, such as 30 minutes or more, a one component pump is preferably used.

The hydrogel forming composition is fed into the tire through an opening, preferably through a tire valve. However, the opening may be also any other opening which is provided in the tire. Usually, a second opening is provided in the tire in order to allow the air in the tire to escape and/or to control completion of filling. Accordingly, the hydrogel forming composition is preferably fed into the tire, which is usually mounted on the rim, through the tire valve with pressure. When the hydrogel forming composition leaks out of the second opening provided in the tire, filling is complete. The second opening can be closed thereafter with a sealing means such as a screw or a sealing material.

Another subject of the present invention is a reinforced hydrogel obtainable by polymerization of the hydrogel forming composition of the present invention. Polymerization is preferably a free-radical polymerization. The polymerization preferably takes place at ambient temperatures, for example in the range of 0 to 40 °C, preferably 5 to 40 °C. After mixing of the constituents of the hydrogel forming composition a free-radical polymerization reaction begins and a (meth)acrylic hydrogel is formed within a time period, whose length depends on the particular embodiment of the hydrogel forming composition.

The reinforced hydrogel of the present invention has been found to have improved mechanical strength compared to State-of-the-Art hydrogels. In particular the reinforced hydrogel has been found to exhibit improved Shore A hardness, tensile strength, elongation at break, and tear propagation resistance.

Preferably, the reinforced hydrogel has Shore A hardness, measured by using the method as defined in DIN 53505 standard, of at least 3.0, more preferably at least 3.5 and/or a tensile strength, measured by using the method as defined in DIN 23504 standard, of at least 0.1 MPa, preferably at least 0.15 MPa and/or elongation at break, measured by using the method as defined in DIN 23504 standard, of at least 100 %, preferably at least 150 % and/or a tear propagation resistance, measured by using the method as defined in DIN 53515 standard, of at least 0.9 N/mm, preferably at least 1.0 N/mm.

The Shore A hardness can be measured according to DIN 53505 on hydrogel samples having dimensions of 50 mm x 50 mm x 25 mm.

The tensile strength and elongation at break can be measured according to DIN 23504 using a tensile speed of 200 mm/min on hydrogel samples having dimensions of a specimen of Type 1 as defined in ISO 527 standard.

The tear propagation resistance can be measured according to DIN 53515 on hydrogel samples having dimensions of an angle test specimen as defined in ISO 34 standard.

Reinforced hydrogels having a tensile strength measured according to DIN 23504 in the range of 0.1 - 0.25 MPa, and/or elongation at break measured according to DIN 23504 in the range of 100 - 200 % and/or a tear propagation resistance measured according to DIN 53515 in the range of 0.9 - 1.5 N/mm, have been found especially suitable for use in injection applications, i.e. for filling cavities in concrete structures.

Another subject of the present invention is a method for improving mechanical strength of a hydrogel by adding a solid particulate filler to a hydrogel forming mixture comprising the constituents a) to c), and e) of the hydrogel forming composition of the present invention, wherein the solid particulate filler is selected from the group consisting of precipitated silica, fumed silica, diatomaceous earth, calcium silicate, precipitated calcium carbonate, particulate silica, phonolite, and mixtures thereof.

According to one or more embodiments, the tensile strength measured by using the method as defined in DIN 23504 standard of a hydrogel is increased by at least 10 %, preferably by at least 20 % compared to a hydrogel prepared from the hydrogel forming mixture not containing the solid particulate filler.

According to one or more embodiments, the elongation at break measured by using the method as defined in DIN 23504 standard of a hydrogel is improved by at least 15 %, preferably by at least 25 % compared to a hydrogel prepared from the hydrogel forming mixture not containing the solid particulate filler.

According to one or more embodiments, the tear propagation resistance measured by using the method as defined in DIN 53515 standard of a hydrogel is improved by at least 15 %, preferably by at least 25 % compared to a hydrogel prepared from the hydrogel forming mixture not containing the solid particulate filler

According to the invention, the hydrogel forming mixture comprises, before the addition of the solid particulate filler, the constituents a) to c), and e) of the hydrogel forming composition of the present invention.

The preferred amount of the solid particulate filler added to the hydrogel forming mixture depends on the field of application and on the desired mechanical properties of the prepared hydrogel. The solid particulate filler may be added to the hydrogel forming mixture to comprise 1 - 35 wt.-%, preferably 2-25 wt.-%, of the total weight of the hydrogel forming mixture.

In case of an injection material used for filling cavities in concrete structures, the amount of the solid particulate filler added to the hydrogel forming mixture is preferably lower in order to keep the viscosity of the hydrogel forming mixture suitable for injection application. It may be preferable that the solid particulate filler is added to the hydrogel forming mixture to comprise 1 - 20 wt.-%, more preferably 2 - 15 wt.-%, even more preferably 2.0 - 9.5 wt.-%, in particular 2.0 - 8.5 wt.-%, more preferably 2.5 - 7.5 wt.-%, most preferably 2.5 - 5.0 wt.-%, of the total weight of the hydrogel forming mixture. In case the hydrogel forming mixture is used to prepare hydrogels suitable for sealing cracks, voids, flaws in concrete structures a higher amount of the solid particulate filler may be used. For example, the solid particulate filler may be added to the hydrogel forming mixture to comprise 1 - 30 wt.-%, preferably 5 - 25 wt.-%, of the total weight of the hydrogel forming mixture. Furthermore, it may be preferable that the solid particulate filler is added to the hydrogel forming composition to comprise 13.0 - 35.0 wt.-%, more preferably 14.5 - 35.0 wt.-%, even more preferably 16.5 - 35.0 wt.-%, in particular 17.5 - 32.5 wt.-%, most preferably 17.5 - 30.0, of the total weight of the hydrogel forming composition.

According to the invention, the solid particulate filler is selected from the group consisting of precipitated silica, fumed silica, diatomaceous earth, calcium silicate, precipitated calcium carbonate, particulate silica, phonolite, and mixtures thereof. A mixture of one or more different solid particulate fillers may also be added to the hydrogel forming mixture.

Preferably, the solid particulate filler has a median particle size d₅₀ of 0.1 - 200.0 µm, more preferably of 1.0 - 100.0 µm, most preferably 5.0 - 50.0 µm.

The solid particulate filler may have a BET surface area, measured by using the method as defined in EN ISO 9277:2010 standard, of not more than 1000 m²/g, preferably not more than 750 m²/g. It may be preferable that the at least one solid particulate filler has a BET surface area, measured by using the method as defined in EN ISO 9277:2010 standard, of 1 - 1000 m²/g, more preferably 5 - 750 m²/g.

The solid particulate filler is preferably selected from the group consisting of precipitated silica, fumed silica, diatomaceous earth, more preferably precipitated silica. Both hydrophilic (water-wettable) and hydrophobic (non-water-wettable) precipitated silicas can be used as the solid particulate filler. Suitable commercially available precipitated silicas include those described above as suitable for use in the hydrogel forming composition of the present invention.

Preferably, the constituent a) is present in the hydrogel forming mixture an amount of 5 - 50 wt.-%, more preferably 10 - 45 wt.-%, even more preferably 12.5 - 40 wt.-%, most preferably 15 - 35 wt.-%, based on the total weight of the hydrogel forming mixture.

Preferably, the weight ratio of the amount of constituent a) to the amount of constituent e) in the hydrogel forming mixture is in the range of 0.1:1 to 5:1, preferably, 0.1:1 to 3:1, more preferably 0.1:1 to 2:1, most preferably 0.1:1 to 1.5:1.

Another subject of the present invention is the use of a solid particulate filler in a hydrogel forming mixture for improving mechanical strength of a hydrogel obtainable from the hydrogel forming mixture comprising the constituents a) to c), and e) of the hydrogel forming composition of the present invention, wherein the solid particulate filler is selected from the group consisting of precipitated silica, fumed silica, diatomaceous earth, calcium silicate, precipitated calcium carbonate, particulate silica, phonolite, and mixtures thereof.

According to the invention, the hydrogel forming mixture comprises the constituents a) to c), and e) of the hydrogel forming composition of the present invention.

The preferred amount of the at least one solid particulate filler in the hydrogel forming mixture depends on the field of application and on the desired mechanical properties of the prepared hydrogel. The solid particulate filler may be present in the hydrogel forming mixture in a total amount of 1 - 35 wt.-%, preferably 2 - 25 wt.-%, based on the total weight of the hydrogel forming mixture.

In case of an injection material used for filling cavities in concrete structures, the amount of the solid particulate filler is preferably lower in order to keep the viscosity of the hydrogel forming mixture suitable for injection application. It may be preferable that the solid particulate filler is present in the hydrogel forming mixture in a total amount of 1 - 20 wt.-%, more preferably 2 - 15 wt.-%, even more preferably 2.0 - 9.5 wt.-%, in particular 2.0 - 8.5 wt.-%, more preferably 2.5 - 7.5 wt.-%, most preferably 2.5 - 5.0 wt.-%, based on the total weight of the hydrogel forming mixture. In case the hydrogel forming mixture is used to prepare hydrogels suitable for sealing cracks, voids, flaws in concrete structures, a higher amount of the solid particulate filler may be used. It may be preferable that the solid particulate filler is present in the hydrogel forming mixture in a total amount of 1 - 30 wt.-%, preferably 5 - 25 wt.-%, based on the total weight of the hydrogel forming mixture. Furthermore, it may be preferable that the solid particulate filler is present in the hydrogel forming composition to comprise 13.0 - 35.0 wt.-%, more preferably 14.5 - 35.0 wt.-%, even more preferably 16.5 - 35.0 wt.-%, in particular 17.5 - 32.5 wt.-%, most preferably 17.5 - 30.0, based on the total weight of the hydrogel forming composition.

According to the invention, the solid particulate filler is selected from the group consisting of precipitated silica, fumed silica, diatomaceous earth, calcium silicate, precipitated calcium carbonate, particulate silica, phonolite, and mixtures thereof. A mixture of one or more different solid particulate fillers may be used in the hydrogel forming mixture to improve the mechanical strength of the hydrogel.

The solid particulate filler is preferably selected from the group consisting of precipitated silica, fumed silica, diatomaceous earth, more preferably precipitated silica. Both hydrophilic (water-wettable) and hydrophobic (non-water-wettable) precipitated silicas can be used as the solid particulate filler. Suitable commercially available precipitated silicas include those described above as suitable for use in the hydrogel forming composition of the present invention.

Preferably, the solid particulate filler has a median particle size d₅₀ of 0.1 - 200.0 µm, more preferably of 1.0 - 100.0 µm, most preferably 5.0 - 50.0 µm.

The solid particulate filler may have a BET surface area, measured by using the method as defined in EN ISO 9277:2010 standard, of not more than 1000 m²/g, preferably not more than 750 m²/g. It may be preferable that the at least one solid particulate filler has a BET surface area, measured by using the method as defined in EN ISO 9277:2010 standard, of 1 - 1000 m²/g, more preferably 5 - 750 m²/g.

Preferably, the constituent a) is present in the hydrogel forming mixture an amount of 5 - 50 wt.-%, more preferably 10 - 45 wt.-%, even more preferably 12.5 - 40 wt.-%, most preferably 15 - 35 wt.-%, based on the total weight of the hydrogel forming mixture.

Preferably, the weight ratio of the amount of constituent a) to the amount of constituent e) in the hydrogel forming mixture is in the range of 0.1:1 to 5:1, preferably, 0.1:1 to 3:1, more preferably 0.1:1 to 2:1, most preferably 0.1:1 to 1.5:1.

### Examples

The followings compounds and products were used in the examples:

**Table 1**

| | | |
|---|---|---|
| HEMA | Hydroxyethyl methacrylate (HEMA) including 400 ppm hydrochinon monomethylether (HMME) as inhibitor | Visiomer HEMA 98, Evonik Industries including 400 ppm of HMME |
| TEA | Triethanolamine (technical grade 85%TEA /15% DEA) | Triethanolamine 85, Ineos Oxide |
| NAPS | Sodium persulfate (as solid or diluted with water to yield a 20 wt.% solution) | CAS # 7775-27-1 |
| Sipernate 360 | Precipitated silica | Evonik Industries |
| Celite 350 | Calcined diatomaceous earth | World minerals |
| Carb-O-Sil TS-720 | Fumed silica | Cabot Corporation |
| Circolite powder | Calcium silicate hydrate | Cirkel GmbH & Co. KG |

The reference and exemplary hydrogel forming compositions Ex-1 to Ex-19 were prepared by mixing the ingredients as shown in Table 2 and 3.

### Gelling time (min)

The gelling time at 23°C was determined by visual inspection (gel time is achieved at the time when gel-like structures are detected).

### Shore A hardness

Shore A hardness was measured according to DIN 53505 on hydrogel test specimen having dimensions of 50 mm x 50 mm x 25 mm.

### The tensile strength and elongation at break

Tensile strength and elongation at break were measured according to DIN 23504 using a tensile speed of 200 mm/min on hydrogel specimen having dimensions of a test specimen of Type 1 as defined in ISO 527 standard.

### The tear propagation resistance

Tear propagation resistance was measured according to DIN 53515 on hydrogel test specimen having dimensions of an angle test specimen as defined in ISO 34 standard.

### Swelling 7 days in water

For the measurement of the swelling properties, a test specimen with dimensions of 1.0 x 1.5 x 1.5 cm was cut from the hydrogel material produced from each of the example compositions. The test specimens were stored in tap water at a temperature of 23 °C and the weight of the test specimen at the beginning and at the end of the test period was determined. The hydrogel forming composition was allowed to polymerize for 24 hours before conducting the swelling test. The swelling values presented in Tables 2 and 3 were determined as the percentage change in weight of the test specimen during the storage in water.

**Table 2**

| **Compositions, [ppw]** | **Ref-1** | **Ex-1** | **Ex-2** | **Ex-3** | **Ex-4** | **Ex-5** | **Ex-6** | **Ex-7** | **Ex-8** | **Ex-9** | **Ex-10** |
|---|---|---|---|---|---|---|---|---|---|---|---|
| HEMA | 20 | 20 | 20 | 20 | 20 | 20 | 20 | 20 | 20 | 20 | 20 |
| TEA | 2 | 2 | 2 | 2 | 2 | 2 | 2 | 2 | 2 | 2 | 2 |
| NAPS | 0.25 | 0.25 | 0.25 | 0.25 | 0.25 | 0.25 | 0.25 | 0.25 | 0.25 | 0.25 | 0.25 |
| Water | 27.75 | 27.75 | 27.75 | 27.75 | 27.75 | 27.75 | 27.75 | 27.75 | 27.75 | 27.75 | 27.75 |
| Sipernate 360 | | 1 | 2.5 | 5 | 12.5 | 25 | | | | | |
| Celite 350 | | | | | | | 1 | 2.5 | 5 | 12.5 | 25 |
| Carb-O-Sil TS-720 | | | | | | | | | | | |
| Circolite powder | | | | | | | | | | | |
| Total | 50 | 51 | 52.5 | 55 | 62.5 | 75 | 51 | 52.5 | 55 | 62.5 | 75 |

| **Mechanical properties** | | | | | | | | | | | |
|---|---|---|---|---|---|---|---|---|---|---|---|
| Gelling time [min] | 6 | 8 | 7 | 7 | 7 | 7 | 7 | 8 | 8 | 9 | 8 |
| Shore A | - | - | 3.6 | 12 | 43 | 81 | 4.9 | 6.3 | 8.9 | 11.8 | 43.4 |
| Tensile strength [MPa] | 0.08 | 0.094 | 0.12 | 0.13 | 0.42 | 0.58 | 0.135 | 0.14 | 0.18 | 0.32 | - |
| Elongation at break [%] | 89 | 124 | 178 | 168 | 244 | 4 | 141 | 115 | 146 | 188 | - |
| Tear propagation resistance [N/mm] | 0.76 | 1.1 | 1.22 | 1.12 | - | - | 0.91 | 1.01 | 2.42 | - | - |

| **Swelling properties** | | | | | | | | | | | |
|---|---|---|---|---|---|---|---|---|---|---|---|
| Swelling by storing 7 days in water [%] | 65 | 59 | 27 | 7 | 9 | 8 | 33 | 7 | 8 | 11 | 21 |

**Table 3:**

| **Compositions, [ppw]** | **Ex-11** | **Ex-12** | **Ex-13** | **Ex-14** | **Ex-15** | **Ex-16** | **Ex-17** | **Ex-18** | **Ex-19** |
|---|---|---|---|---|---|---|---|---|---|
| HEMA | 20 | 20 | 20 | 20 | 20 | 20 | 20 | 20 | 20 |
| TEA | 2 | 2 | 2 | 2 | 2 | 2 | 2 | 2 | 2 |
| NAPS | 0.2 | 0.2 | 0.2 | 0.2 | 0.2 | 0.2 | 0.2 | 0.2 | 0.2 |
| Water | 27.75 | 27.75 | 27.75 | 27.75 | 27.75 | 27.75 | 27.75 | 27.75 | 27.75 |
| Sipernate 360 | | | | | | | | | |
| Celite 350 | | | | | | | | | |
| Carb-O-Sil TS-720 | 1 | 2.5 | 5 | 12.5 | | | | | |
| Circolite powder | | | | | 1 | 2.5 | 5 | 12.5 | 25 |
| Total | 50.95 | 52.45 | 54.95 | 62.45 | 50.95 | 52.45 | 54.95 | 62.45 | 74.95 |

| **Mechanical properties** | | | | | | | | | |
|---|---|---|---|---|---|---|---|---|---|
| Gelling time [min] | 13 | 12 | 16 | 12 | 9 | 8 | 10 | 10 | 11 |
| Shore A | 13.3 | 12.1 | 15.9 | 34.2 | - | 6 | 6 | 11.3 | - |
| Tensile strength [MPa] | 0.20 | 0.16 | - | 0.45 | - | 0.125 | 0.18 | 0.22 | 0.61 |
| Elongation at break [%] | 83 | 106 | - | 107 | - | 114 | 173 | 178 | 314 |
| Tear propagation resistance [N/mm] | 1.07 | 1.65 | 2.35 | - | 0.83 | 1.01 | 1.43 | - | - |

| **Swelling properties** | | | | | | | | | |
|---|---|---|---|---|---|---|---|---|---|
| Swelling by storing 7 days in water [%] | 13 | 31 | 1 | 3 | 21 | 8 | 12 | 3 | 13 |

## Claims

1. A hydrogel forming composition comprising:
a) At least one water-soluble (meth)acrylic compound,
b) At least one free-radical initiator,
c) Optionally at least one accelerator,
d) At least one solid particulate filler, and
e) Water,
wherein the at least one solid particulate filler comprises 1 - 35 wt.-% of the total weight of the hydrogel forming composition and wherein the weight ratio of the total amount of said at least one water-soluble (meth)acrylic compound to the amount of water is in the range of 0.1:1 to 5:1 and wherein the at least one solid particulate filler is selected from the group consisting of precipitated silica, fumed silica, diatomaceous earth, calcium silicate, precipitated calcium carbonate, particulate silica, and phonolite and wherein the at least one solid particulate filler has a median particle size d₅₀ of 1.0 - 100.0 µm.

2. The hydrogel forming composition according to claim 1, wherein the at least one (meth)acrylic compound is present in the hydrogel forming composition in a total amount of 5 - 50 wt.-%, more preferably 10 - 45 wt.-%, based on the total weight of the hydrogel forming composition.

3. The hydrogel forming composition according to claim 1 or 2 wherein the water-soluble (meth)acrylic compound comprises at least one hydroxyl-functional (meth)acrylic compound selected from the group consisting of hydroxyethylmethacrylate (HEMA), hydroxyethylacrylate (HEA), hydroxypropylmethacrylate (HPMA), hydroxypropylacrylate (HPA), hydroxybutylmethacrylate (HBMA) and hydroxybutylacrylate (HBA).

4. The hydrogel forming composition according to any of previous claims, wherein the weight ratio of the total amount of said at least one water-soluble (meth)acrylic compound to the amount of water is in the range of 0.1:1 to 3:1, preferably, 0.1:1 to 2:1.

5. The hydrogel forming composition according to any of previous claims, wherein the at least one solid particulate filler is selected from the group consisting of precipitated silica, fumed silica, and diatomaceous earth.

6. The hydrogel forming composition according to any of previous claims, wherein the at least one solid particulate filler is precipitated silica.

7. A method for producing a hydrogel forming composition according to any of claims 1-6 comprising steps of:
i) Providing a multiple-component composition comprising the constituents a) to d) as defined in any of claims 1-6 and
ii) Mixing the multiple-component composition with water, or
i') Providing a multiple-component composition comprising the constituents a) to c) as defined in any of claims 1-6,
ii') Mixing the multiple-component composition provided in step i') with water, and
iii') Mixing the mixture obtained in step ii') with the constituent d) as defined in any of claims 1-6, or
i") Providing a multiple-component composition comprising the constituents a) to c) as defined in any of claims 1-6,
ii") Mixing the constituent d) as defined in any of claims 1-6 with water, and
iii") Mixing the multiple-component composition obtained in step i") with the mixture obtained in step ii").

8. Use of the hydrogel forming composition according to any of claims 1-6 as injection material for sealing of constructions, tunnels, or mines or as a tire filling material.

9. A reinforced hydrogel obtainable by free-radical polymerization of the hydrogel forming composition according to any of claims 1-6.

10. The reinforced hydrogel according to claim 9 having a Shore A hardness measured according to DIN 53505 of at least 3.0 and/or a tensile strength measured according to DIN 23504 of at least 0.1 MPa and/or elongation at break measured according to DIN 23504 of at least 100 % and/or a tear propagation resistance measured according to DIN 53515 of at least 0.9 N/mm.

11. A method for improving mechanical strength of a hydrogel by adding a solid particulate filler to a hydrogel forming mixture comprising the constituents a) to c), and e) of the hydrogel forming composition as defined in any of claims 1-6, wherein the solid particulate filler is selected from the group consisting of precipitated silica, fumed silica, diatomaceous earth, calcium silicate, precipitated calcium carbonate, particulate silica, phonolite, and mixtures thereof.

12. The method according to claim 11, wherein the tensile strength measured according to DIN 23504 of a hydrogel is increased by at least 10 %, preferably by at least 20 % and/or the elongation at break measured according to DIN 23504 of a hydrogel is improved by at least 15 %, preferably by at least 25 % and/or the tear propagation resistance measured according to DIN 53515 of a hydrogel is improved by at least 15 %, preferably by at least 25 %, compared to a hydrogel prepared from a hydrogel forming mixture not containing the solid particulate filler.

13. The method according to claim 11 or 12, wherein the weight ratio of the amount of constituent a) to the amount of constituent e) in the hydrogel forming mixture is in the range of 0.1:1 to 5:1, preferably, 0.1:1 to 3:1

14. The method according to any of claims 11-13, wherein the solid particulate filler is added to the hydrogel forming mixture to comprise 1 - 30 wt.-%, preferably 2 - 25 wt.-%, of the total weight of the hydrogel forming mixture.

15. The method according to any of claims 11-14, wherein the solid particulate filler is selected from the group consisting of precipitated silica, fumed silica, diatomaceous earth, and mixtures thereof.

16. Use of a solid particulate filler in a hydrogel forming mixture for improving mechanical strength of a hydrogel obtainable from said mixture, wherein the hydrogel forming mixture comprises the constituents a) to c), and e) of the hydrogel forming composition as defined in any of claims 1-6, wherein the solid particulate filler is selected from the group consisting of precipitated silica, fumed silica, diatomaceous earth, calcium silicate, precipitated calcium carbonate, particulate silica, phonolite, and mixtures thereof.

17. The use according to claim 16, wherein the weight ratio of the amount of constituent a) to the amount of constituent e) in the hydrogel forming mixture is in the range of 0.1:1 to 5:1, preferably, 0.1:1 to 3:1.

18. The use according to claim 16 or 17, wherein the solid particulate filler is selected from the group consisting of precipitated silica, fumed silica, diatomaceous earth, and mixtures thereof.

## Patentansprüche

1. Hydrogel bildende Zusammensetzung, umfassend:
a) mindestens eine wasserlösliche (Meth)acrylverbin-dung,
b) mindestens einen freiradikalischen Initiator,
c) gegebenenfalls mindestens einen Beschleuniger,
d) mindestens einen festen partikelförmigen Füllstoff und
e) Wasser,
wobei der mindestens eine feste partikelförmige Füllstoff 1 bis 35 Gew.% des Gesamtgewichts der Hydrogel bildenden Zusammensetzung umfasst, und wobei das Gewichtsverhältnis der Gesamtmenge der mindestens einen wasserlöslichen (Meth)acrylsäureverbindung zu der Menge an Wasser im Bereich von 0,1:1 bis 5:1 liegt, und wobei der mindestens eine feste partikelförmige Füllstoff ausgewählt ist aus der Gruppe bestehend aus ausgefällter Kieselsäure, pyrogener Kieselsäure, Kieselerde, Calciumsilikat, ausgefälltem Calciumcarbonat, partikelförmiger Kieselsäure und Phonolit, und wobei der mindestens eine feste partikelförmige Füllstoff einen Medianwert der Partikelgröße, d₅₀, von 1,0 bis 100,0 um aufweist.

2. Hydrogel bildende Zusammensetzung nach Anspruch 1, wobei die mindestens eine (Meth)acrylverbindung in der Hydrogel bildenden Zusammensetzung in einer Gesamtmenge von 5 bis 50 Gew.%, bevorzugter 10 bis 45 Gew.%, bezogen auf das Gesamtgewicht der Hydrogel bildenden Zusammensetzung, vorhanden ist.

3. Hydrogel bildende Zusammensetzung nach Anspruch 1 oder 2, wobei die wasserlösliche (Meth)acrylverbindung mindestens eine hydroxyfunktionelle (Meth)acrylverbindung ausgewählt aus der Gruppe bestehend aus Hydroxyethylmethacrylat (HEMA), Hydroxyethylacrylat (HEA), Hydroxypropylmethacrylat (HPMA), Hydroxypropylacrylat (HPA), Hydroxybutylmethacrylat (HBMA) und Hydroxybutylacrylat (HBA) umfasst.

4. Hydrogel bildende Zusammensetzung nach einem der vorhergehenden Ansprüche, wobei das Gewichtsverhältnis der Gesamtmenge der mindestens einen wasserlöslichen (Meth)acrylverbindung zu der Menge an Wasser im Bereich von 0,1:1 bis 3:1 liegt, vorzugsweise 0,1:1 bis 2:1.

5. Hydrogel bildende Zusammensetzung nach einem der vorhergehenden Ansprüche, wobei der mindestens eine feste partikelförmige Füllstoff ausgewählt ist aus der Gruppe bestehend aus ausgefällter Kieselsäure, pyrogener Kieselsäure und Kieselerde.

6. Hydrogel bildende Zusammensetzung nach einem der vorhergehenden Ansprüche, wobei der mindestens eine feste partikelförmige Füllstoff ausgefällte Kieselsäure ist.

7. Verfahren zur Herstellung einer Hydrogel bildenden Zusammensetzung nach einem der Ansprüche 1 bis 6, umfassend die Schritte:
i) Bereitstellen einer Mehrkomponentenzusammensetzung, welche die Bestandteile a) bis d) wie in einem der Ansprüche 1 bis 6 definiert umfasst, und
ii) Mischen der Mehrkomponentenzusammensetzung mit Wasser, oder
i') Bereitstellen einer Mehrkomponentenzusammensetzung, welche die Bestandteile a) bis c) wie in einem der Ansprüche 1 bis 6 definiert umfasst,
ii') Mischen der in Schritt i') bereitgestellten Mehrkomponentenzusammensetzung mit Wasser, und
iii') Mischen der in Schritt ii') erhaltenen Mischung mit dem Bestandteil d), wie in einem der Ansprüche 1 bis 6 definiert, oder
i") Bereitstellen einer Mehrkomponentenzusammensetzung, welche die Bestandteile a) bis c) wie in einem der Ansprüche 1 bis 6 definiert umfasst,
ii") Mischen des Bestandteils d), wie in einem der Ansprüche 1 bis 6 definiert, mit Wasser, und
iii") Mischen der in Schritt i") erhaltenen Mehrkomponentenzusammensetzung mit der in Schritt ii") erhaltenen Mischung.

8. Verwendung der Hydrogel bildenden Zusammensetzung nach einem der Ansprüche 1 bis 6 als Einspritzmaterial zum Dichten von Bauwerken, Tunneln oder Minen, oder als Reifenfüllmaterial.

9. Verstärktes Hydrogel, das durch freiradikalische Polymerisation der Hydrogel bildenden Zusammensetzung nach einem der Ansprüche 1 bis 6 erhältlich ist.

10. Verstärktes Hydrogel nach Anspruch 9 mit einer Shore A-Härte, gemessen gemäß DIN 53505, von mindestens 3,0 und/oder einer Zugfestigkeit, gemessen gemäß DIN 23504, von mindestens 0,1 MPa und/oder einer Bruchdehnung, gemessen gemäß DIN 23504, von mindestens 100 % und/oder einer Weiterreißfestigkeit, gemessen gemäß DIN 53515, von mindestens 0,9 N/mm.

11. Verfahren zur Verbesserung der mechanischen Festigkeit eines Hydrogels durch Zugeben eines festen partikelförmigen Füllstoffs zu einer Hydrogel bildenden Mischung, welche die Bestandteile a) bis c) sowie e) der Hydrogel bildenden Zusammensetzung wie in einem der Ansprüche 1 bis 6 definiert umfasst, wobei der feste partikelförmige Füllstoff ausgewählt ist aus der Gruppe bestehend aus ausgefällter Kieselsäure, pyrogener Kieselsäure, Kieselerde, Calciumsilikat, ausgefälltem Calciumcarbonat, partikelförmiger Kieselsäure, Phonolit und Mischungen davon.

12. Verfahren nach Anspruch 11, wobei die Zugfestigkeit, gemessen gemäß DIN 23504, eines Hydrogels um mindestens 10 %, vorzugsweise mindestens 20 % erhöht wird, und/oder die Bruchdehnung, gemessen gemäß DIN 23504, eines Hydrogels um mindestens 15 %, vorzugsweise mindestens 25 % verbessert wird, und/oder die Weiterreißfestigkeit, gemessen gemäß DIN 53515, eines Hydrogels um mindestens 15 %, vorzugsweise mindestens 25 % verbessert wird, verglichen mit einem Hydrogel, das aus einer Hydrogel bildenden Mischung hergestellt ist, die den festen partikelförmigen Füllstoff nicht enthält.

13. Verfahren nach Anspruch 11 oder 12, wobei das Gewichtsverhältnis der Menge an Bestandteil a) zu der Menge an Bestandteil e) in der Hydrogel bildenden Mischung im Bereich von 0,1:1 bis 5:1, vorzugsweise 0,1:1 bis 3:1 liegt.

14. Verfahren nach einem der Ansprüche 11 bis 13, wobei der feste partikelförmige Füllstoff der Hydrogel bildenden Mischung so zugegeben wird, dass er 1 bis 30 Gew.%, vorzugsweise 2 bis 25 Gew.% des Gesamtgewichts der Hydrogel bildenden Mischung ausmacht.

15. Verfahren nach einem der Ansprüche 11 bis 14, wobei der feste partikelförmige Füllstoff ausgewählt ist aus der Gruppe bestehend aus ausgefällter Kieselsäure, pyrogener Kieselsäure, Kieselerde und Mischungen davon.

16. Verwendung eines festen partikelförmigen Füllstoffs in einer Hydrogel bildenden Mischung zur Verbesserung der mechanischen Festigkeit eines Hydrogels, das aus der Mischung erhältlich ist, wobei die Hydrogel bildende Mischung die Bestandteile a) bis c) sowie e) der Hydrogel bildenden Zusammensetzung wie in einem der Ansprüche 1 bis 6 definiert umfasst, wobei der feste partikelförmige Füllstoff ausgewählt ist aus der Gruppe bestehend aus ausgefällter Kieselsäure, pyrogener Kieselsäure, Kieselerde, Calciumsilikat, ausgefälltem Calciumcarbonat, partikelförmiger Kieselsäure, Phonolit und Mischungen davon.

17. Verwendung nach Anspruch 16, wobei das Gewichtsverhältnis der Menge an Bestandteil a) zu der Menge an Bestandteil e) in der Hydrogel bildenden Mischung im Bereich von 0,1:1 bis 5:1, vorzugsweise 0,1:1 bis 3:1 liegt.

18. Verwendung nach Anspruch 16 oder 17, wobei der feste partikelförmige Füllstoff ausgewählt ist aus der Gruppe bestehend aus ausgefällter Kieselsäure, pyrogener Kieselsäure, Kieselerde und Mischungen davon.

## Revendications

1. Composition de formation d'hydrogel comprenant :
a) au moins un composé (méth)acrylique soluble dans l'eau,
b) au moins un initiateur de radicaux libres,
c) éventuellement au moins un accélérateur,
d) au moins une charge particulaire solide, et
e) de l'eau,
l'au moins une charge particulaire solide représentant 1 à 35 % en poids du poids total de la composition de formation d'hydrogel et le rapport en poids de la quantité totale dudit au moins un composé (méth)acrylique soluble dans l'eau sur la quantité d'eau étant dans la plage de 0,1 : 1 à 5 : 1 et l'au moins une charge particulaire solide étant choisie dans le groupe constitué par une silice précipitée, une silice fumée, de la terre à diatomées, un silicate de calcium, un carbonate de calcium précipité, une silice particulaire, et une phonolite et l'au moins une charge particulaire solide ayant une taille médiane de particule d₅₀ de 1,0 à 100,0 µm.

2. Composition de formation d'hydrogel selon la revendication 1, l'au moins un composé (méth)acrylique étant présent dans la composition de formation d'hydrogel en une quantité totale de 5 à 50 % en poids, plus préférablement 10 à 45 % en poids, sur la base du poids total de la composition de formation d'hydrogel.

3. Composition de formation d'hydrogel selon la revendication 1 ou 2, le composé (méth)acrylique soluble dans l'eau comprenant au moins un composé (méth)acrylique fonctionnalisé par hydroxyle choisi dans le groupe constitué par le méthacrylate d'hydroxyéthyle (HEMA), l'acrylate d'hydroxyéthyle (HEA), le méthacrylate d'hydroxypropyle (HPMA), l'acrylate d'hydroxypropyle (HPA), le méthacrylate d'hydroxybutyle (HBMA) et l'acrylate d'hydroxybutyle (HBA).

4. Composition de formation d'hydrogel selon l'une quelconque des revendications précédentes, le rapport en poids de la quantité totale dudit au moins un composé (méth)acrylique soluble dans l'eau sur la quantité d'eau étant dans la plage de 0,1 : 1 à 3 : 1, préférablement, 0,1 : 1 à 2 : 1.

5. Composition de formation d'hydrogel selon l'une quelconque des revendications précédentes, l'au moins une charge particulaire solide étant choisie dans le groupe constitué par une silice précipitée, une silice fumée et de la terre à diatomées.

6. Composition de formation d'hydrogel selon l'une quelconque des revendications précédentes, l'au moins une charge particulaire solide étant une silice précipitée.

7. Procédé de production d'une composition de formation d'hydrogel selon l'une quelconque des revendications 1 à 6 comprenant les étapes de :
i) fourniture d'une composition à plusieurs composants comprenant les constituants a) à d) telle que définie dans l'une quelconque des revendications 1 à 6 et
ii) mélange de la composition à plusieurs composants avec de l'eau, ou
i') fourniture d'une composition à plusieurs composants comprenant les constituants a) à c) tels que définis dans l'une quelconque des revendications 1 à 6,
ii') mélange de la composition à plusieurs composants fournie dans l'étape i') avec de l'eau, et
iii') mélange du mélange obtenu dans l'étape ii') avec le constituant d) tel que défini dans l'une quelconque des revendications 1 à 6, ou
i") fourniture d'une composition à plusieurs composants comprenant les constituants a) à c) tels que définis dans l'une quelconque des revendications 1 à 6,
ii') mélange du constituant d) tel que défini dans l'une quelconque des revendications 1 à 6 avec de l'eau, et
iii") mélange de la composition à plusieurs composants obtenue dans l'étape i") avec le mélange obtenu dans l'étape ii").

8. Utilisation de la composition de formation d'hydrogel selon l'une quelconque des revendications 1 à 6 comme matériau d'injection pour le scellement de constructions, de tunnels ou de mines ou en tant que matériau de remplissage de pneu.

9. Hydrogel renforcé pouvant être obtenu par polymérisation par voie radicalaire libre de la composition de formation d'hydrogel selon l'une quelconque des revendications 1 à 6.

10. Hydrogel renforcé selon la revendication 9 ayant une dureté Shore A mesurée selon la norme DIN 53505 d'au moins 3,0 et/ou une résistance en traction mesurée selon la norme DIN 23504 d'au moins 0,1 MPa et/ou une élongation à la rupture mesurée selon la norme DIN 23504 d'au moins 100 % et/ou une résistance à la propagation d'une déchirure mesurée selon la norme DIN 53515 d'au moins 0,9 N/mm.

11. Procédé pour l'amélioration de la résistance mécanique d'un hydrogel en ajoutant une charge particulaire solide à un mélange de formation d'hydrogel comprenant les constituants a) à c), et e) de la composition de formation d'hydrogel telle que définie dans l'une quelconque des revendications 1 à 6, la charge particulaire solide étant choisie dans le groupe constitué par une silice précipitée, une silice fumée, de la terre à diatomées, un silicate de calcium, un carbonate de calcium précipité, une silice particulaire, et une phonolite, et des mélanges correspondants.

12. Procédé selon la revendication 11, la résistance en traction mesurée selon la norme DIN 23504 d'un hydrogel étant augmentée d'au moins 10 %, préférablement d'au moins 20 % et/ou l'élongation à la rupture mesurée selon la norme DIN 23504 d'un hydrogel étant améliorée d'au moins 15 %, préférablement d'au moins 25 %, et/ou la résistance à la propagation d'une déchirure mesurée selon la norme DIN 53515 d'un hydrogel étant améliorée d'au moins 15 %, préférablement d'au moins 25 %, par comparaison avec un hydrogel préparé à partir d'un mélange de formation d'hydrogel ne contenant pas la charge particulaire solide.

13. Procédé selon la revendication 11 ou 12, le rapport en poids de la quantité de constituant a) sur la quantité de constituant e) dans le mélange de formation d'hydrogel étant dans la plage de 0,1 : 1 à 5 : 1, préférablement, 0,1 : 1 à 3 : 1.

14. Procédé selon l'une quelconque des revendications 11 à 13, la charge particulaire solide étant ajoutée au mélange de formation d'hydrogel pour représenter 1 à 30 % en poids, préférablement 2 à 25 % en poids, du poids total du mélange de formation d'hydrogel.

15. Procédé selon l'une quelconque des revendications 11 à 14, la charge particulaire solide étant choisie dans le groupe constitué par une silice précipitée, une silice fumée, la terre à diatomées, et des mélanges correspondants.

16. Utilisation d'une charge particulaire solide dans un mélange de formation d'hydrogel pour l'amélioration de la résistance mécanique d'un hydrogel pouvant être obtenu à partir dudit mélange, le mélange de formation d'hydrogel comprenant les constituants a) à c), et e) de la composition de formation d'hydrogel telle que définie dans l'une quelconque des revendications 1 à 6, la charge particulaire solide étant choisie dans le groupe constitué par une silice précipitée, une silice fumée, de la terre à diatomées, un silicate de calcium, un carbonate de calcium précipité, une silice particulaire, et une phonolite, et des mélanges correspondants.

17. Utilisation selon la revendication 16, le rapport en poids de la quantité de constituant a) sur la quantité de constituant e) dans le mélange de formation d'hydrogel étant dans la plage de 0,1 : 1 à 5 : 1, préférablement, 0,1 : 1 à 3 : 1.

18. Utilisation selon la revendication 16 ou 17, la charge particulaire solide étant choisie dans le groupe constitué par une silice précipitée, une silice fumée, la terre à diatomées, et des mélanges correspondants.
